Europäisches Patentamt

European Patent Office

Office européen des brevets

(19)

(11) **EP 0 610 276 B1**

(12) **EUROPÄISCHE PATENTSCHRIFT**

(45) Veröffentlichungstag und Bekanntmachung des Hinweises auf die Patenterteilung:
**19.02.1997   Patentblatt 1997/08**

(21) Anmeldenummer: **92921670.3**

(22) Anmeldetag: **22.10.1992**

(51) Int Cl.6: **H04L 12/40**, H04L 12/44, H04L 25/08

(86) Internationale Anmeldenummer:
**PCT/EP92/02430**

(87) Internationale Veröffentlichungsnummer:
**WO 93/08659 (29.04.1993 Gazette 1993/11)**

(54) **DATENKOMMUNIKATIONSSYSTEM**

DATA COMMUNICATION SYSTEM

SYSTEME DE TRANSMISSION DE DONNEES

(84) Benannte Vertragsstaaten:
**DE ES FR GB IT**

(30) Priorität: **26.10.1991   DE 4135436**

(43) Veröffentlichungstag der Anmeldung:
**17.08.1994   Patentblatt 1994/33**

(73) Patentinhaber: **Daimler-Benz Aktiengesellschaft 70546 Stuttgart (DE)**

(72) Erfinder:
 • **RALL, Bernhard**
  **D-7900 Ulm (DE)**
 • **PETRY, Franz, Josef**
  **D-7053 Kernen (DE)**
 • **MINUTH, Jürgen**
  **D-7320 Göppingen (DE)**

 • **KÜHNER, Thilo**
  **D-7148 Remseck 2 (DE)**
 • **GRIMMEISEN, Sebastian**
  **D-7050 Waiblingen (DE)**
 • **HÄUSSLER, Bernd**
  **D-7302 Ostfildern 2 (DE)**

(74) Vertreter: **Weber, Gerhard, Dipl.-Phys. et al AEG Aktiengesellschaft 60591 Frankturt (DE)**

(56) Entgegenhaltungen:
 **FR-A- 2 321 201        US-A- 4 646 319**

 • **NEW ELECTRONICS.INCORPORATING ELECTRONICS TODAY Bd. 18, Nr. 16, August 1985, LONDON GB Seiten 45 - 48 C.P. WYLES 'LOCAL AREA NETWORKS - REMOVING THE MYSTIQUE'**

## Beschreibung

Die Erfindung betrifft ein Datenkommunikationssystem, insbesondere in Kraftfahrzeugen, mit mehreren Teilnehmer-Endstellen, die durch Übertragungsleitungen zum wechselseitigen Datentransfer verbunden sind.

In "Local Area Networks-Removing The Mystique" von C.P. Wyles, New Electronics, Bd. 18 (1985), S. 45-48 sind mehrere Netzwerkstrukturen wie Stern-, Ring- oder BUS-Strukturen sowie Kombinationen in Form einer Ringleitung mit sternförmig abgehenden Teilnehmer-Anschlußleitungen beschrieben.

Zum wechselseitigen Datentransfer zwischen einer Mehrzahl von Teilnehmer-Endstellen sind insbesondere die BUS-Systeme gebräuchlich. Für den Einsatz in Kraftfahrzeugen, die ja besonders intensiven Störeinflüssen ausgesetzt sind, ist beispielsweise das CAN-BUS-System bekannt. Bei diesem ist die BUS-Leitung durch eine Zweidraht-Leitung gebildet, die an beiden Enden durch je einen Abschlußwiderstand für die Nutzsignale annähernd reflexionsfrei abgeschlossen ist. Die Endstellen sind unmittelbar` oder über sehr kurze Leitungsstücke an die BUS-Leitung angeschlossen. Bei flexibler Beschaltung mit unterschiedlicher Auswahl von Endstellen ist es nicht festgelegt, welche Endstelle die letzte am Ende des Busses ist, d.h. wo der Abschlußwiderstand eingebaut werden muß.

Der vorliegenden Erfindung liegt daher die Aufgabe zugrunde, ein Datenkommunikationssystem der eingangs genannten Art anzugeben, das tolerant gegen Aufbau in unterschiedlichen Beschaltungen ist, insbesondere auch in Kraftfahrzeugen, und dabei trotz seiner Flexibilität einwandfreie Impulsübertragung gewährleistet.

Die Erfindung ist im Patentanspruch 1 beschrieben. Die Unteransprüche enthalten vorteilhafte Ausgestaltungen und Weiterbildungen der Erfindung.

Das erfindungsgemäße System erlaubt weitgehend beliebige Konfigurationen und innerhalb gewisser Grenzen auch eine variierende Anzahl von angeschlossenen Teilnehmer-Endstellen. Besonders vorteilhaft ist, daß mittels der Lastimpedanz die Gleichspannungseigenschaften des Netzes getrennt von den hochfrequenten Eigenschaften definiert und insbesondere auch z.B. an durch die Endstellen vorgegebene Systemparameter angepaßt werden können. Unter Hochfrequenz ist dabei jeweils der wesentlich über der Nutzsignalfrequenz bzw. der Übertragungsrate bei digitaler Kommunikation liegende Frequenzbereich zu verstehen. Bei der Datenübertragung werden durch die Dämpfungsmittel störende Einschwingvorgänge an Symbolflanken wirkungsvoll unterdrückt und Reflexionen an dem oder den Netzknoten vermieden, während im eingeschwungenen Zustand die Dämpfungsmittel unwirksam sind und die Netzparameter im wesentlichen nur durch die Lastimpedanz gegeben sind. Dabei ist angenommen, daß die Anschlüsse nicht sendender Endstellen hochohmig gegenüber dem Wellenwiderstand der Übertragungsleitungen sind.

Die Dämpfungsmittel sind vorzugsweise Dämpfungsperlen aus Ferritmaterial. Bevorzugt sind Materialien mit einer Anfangspermeabilität von ca. 2000 eingesetzt.

Bei einem Netzaufbau mit mehreren Sternnetzen, die jedes für sich mehrere sternförmig in einem Sternknoten zusammenlaufende Übertragungsleitungen zu Teilnehmer-Endstellen aufweisen, sind die Sternknoten untereinander über Verbindungsleitungen, vorzugsweise nach Art einer Baumstruktur verbunden. Bei einer Baumstruktur gibt es zwischen zwei beliebigen Teilnehmer-Endstellen jeweils nur einen Verbindungsweg, während bei einer Maschenstruktur zwei oder mehr solcher Verbindungswege bestehen. Eine Baumstruktur ist z.B. in einem Kraftfahrzeug von besonderem Vorteil, wenn eine erste Gruppe von Teilnehmer-Endstellen, beispielsweise Steuergeräte unter der Motorhaube, mit einer zweiten Gruppe, beispielsweise am Kofferraum, in einem System zu verbinden sind. Die erste Gruppe kann dann in einem ersten Sternnetz, die zweite in einem zweiten Sternnetz zusammengefaßt sein und es genügt eine einzige Verbindungsleitung zwischen Bug und Heck, welche die beiden räumlich getrennten Sternknoten verbindet. Die Struktur kann durch weitere Sternnetze in den Türen etc. erweitert werden. Dabei tritt der Lastwiderstand innerhalb des Systems nur einfach auf und ist vorzugsweise in einem zentralen Sternknoten konzentriert angeordnet.

Die Verbindungsleitungen sind gleich ausgeführt wie die Übertragungsleitungen und ebenso wie diese an jedem der verbundenen Sternknoten mit den Dämpfungsmitteln versehen. Der besondere Vorteil ist dabei neben der Unabhängigkeit von der Lage des Sternknotens mit dem Lastwiderstand die Freiheit in der Verdrahtung einerseits und der Beschaltung andererseits. Die Dämpfungsmittel in ihrer besonders gewählten Dimensionierung und Anordnung gewährleisten einen Wellenwiderstandsabschluß bei Hochfrequenz für Gleichtakt- und Gegentakt-Signalanteile. Fehlabschlüsse sind in kleinen Ausmaßen unkritisch, weil die reflektierte Leistung mit dem Quadrat des Reflexionsfaktors abnimmt.

Die Erfindung ist nachfolgend anhand von Ausführungsbeispielen unter Bezugnahme auf die Zeichnungen noch eingehend erläutert. Dabei zeigt:

FIG. 1: die übliche Anordnung einer BUS-Leitung mit Abschlußwiderständen und mehreren Endstellen

FIG. 2: eine sternförmige Anordnung von Datenleitungen

FIG. 3: die Topologie von FIG. 2 in ebener Darstellung

FIG. 4: die idealisierte Ortskurve des Scheinwiderstandes einer Dämpfungsperle und ihr Ersatzbild 1. Ordnung

FIG. 5: zeigt eine Anordnung nach der Erfindung mit Dämpfungsperlen zu hochfrequenter Wellenwiderstandsanpassung

FIG. 6: eine Ausführungsform eines Sternknotens mit Lastwiderstand

FIG. 7: eine Anordnung zur Wellenwiderstandsanpassung für Gleichtaktsignale

FIG. 8: eine Anordnung mit zwei verbundenen Sternnetzen

FIG. 9: die Topologie von FIG. 8 in ebener Darstellung

FIG. 10: eine Ausführung der Leitungen als Sternviererkabel mit einer dazu vorteilhaften Ausbildung eines zentralen Sternknotens.

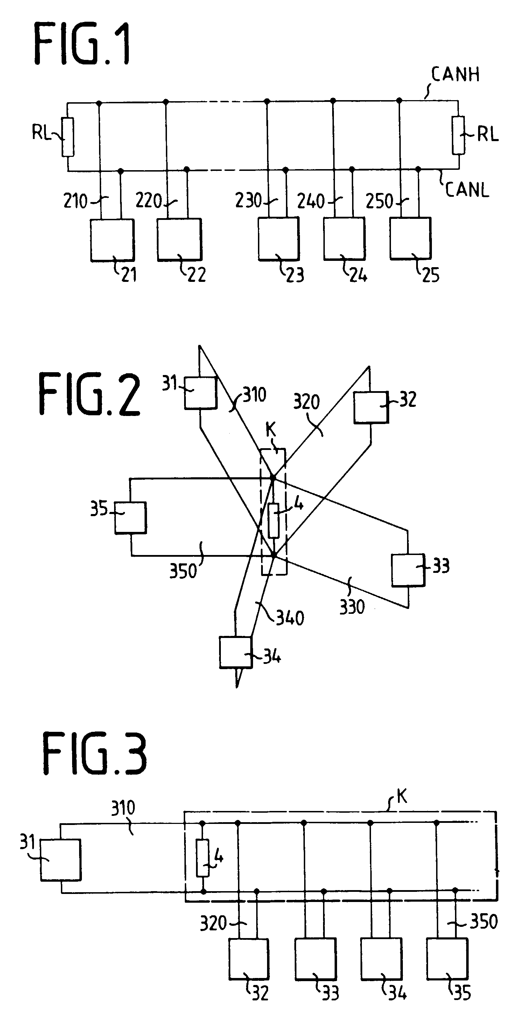

Bei dem in FIG. 1 als Beispiel skizzierten CAN-BUS-System bildet eine zweiadrige Leitung mit den Adern CANH und CANL die übertragungsleitung, die den Wellenwiderstand Z besitzt und an beiden Enden mit Lastwiderständen RL=Z reflexionsfrei abgeschlossen ist. Als Teilnehmer-Endstellen sind Steuereinheiten 21 bis 25 über Anschlußleitungen 210 bis 250 mit der BUS-Leitung verbunden. Wenn die Anschlußleitungen hinreichend kurz sind, sieht jede Steuereinheit 21 bis 25 in die BUS-Leitung gemessen eine Impedanz von Z/2, wobei alle nicht sendenden Endstellen als hochohmig gegen Z/2 angenommen sind und im Regelfall die BUS-Leitung nur von einer Endstelle mit Sendesignalen beaufschlagt wird. Will man das skizzierte BUS-System variieren und z.B. die BUS-Leitung über das Steuergerät 25 verlängern, bei welchem gerade einer der Abschlußwiderstände angeordnet ist, so müßte man diesen entfernen und bei dem jetzt weiter entfernten neuen Steuergerät anschließerr. Durch dieses Umbauerfordernis erweist sich das skizzierte System als relativ unflexibel.

Bei dem in FIG. 2 und FIG. 3 skizzierten System sind die Steuergeräte 31 bis 35 über Übertragungsleitungen 310 bis 350 sternförmig über einen Sternknoten miteinander verbunden. Im Sternknoten K ist ein ohmscher Lastwiderstand 4 als Kernwiderstand mit Wert RK angeordnet. Werden dieselben Systemparameter für die Datenübertragung wie in dem System nach FIG. 1 angenommen, so übernimmt der Kernwiderstand RK in FIG. 2 die Funktion der beiden Abschlußwiderstände RL und es ist zu wählen RK=RL/2 = Z/2 mit Z als Wellenwiderstand der Übertragungsleitungen 310 bis 350. Die übertragungsleitungen sind in diesem System nicht längenbegrenzt und können z.B. in größeren Nutzfahrzeugen leicht Längen bis zu 40 m erreichen. Bei der Datenübertragung mit CAN-BUS-Komponenten auftretende Signalflanken mit typischerweise 10 ns Dauer weisen bis zu einigen $10^8$ Hz Oberwellen mit nicht vernachlässigbaren Amplituden auf. Die Wellenlänge dieser Oberwellen auf Kabeln kann bis auf 50 cm herunterreichen, so daß die auftretenden Kabellängen groß gegen diese Wellenlängen sind. Bei der Betrachtung der Impedanzverhältnisse für die Oberwellen der Signalflanken ergibt sich, daß ein sendender Teilnehmer parallel zu dem Kernwiderstand im Netzknoten die Übertragungsleitungen zu den anderen Endstellen mit jeweils dem Wellenwiderstand Z sieht. Die resultierende Kernimpedanz im Sternknoten K geht mit zunehmender Anzahl von Teilnehmern gegen Null. Ist auf der Seite eines nicht sendenden Teilnehmers Leerlauf, so ist im Sternknoten die Leitung praktisch im Kurzschluß für die hin und herlaufenden Signalflanken, so daß starke und die Umgebung störende Einschwingvorgänge an jeder Signalflanke entstehen. Nach der Einschwingzeit ist der Systemzustand durch die Endstellen und den Kernwiderstand RK bestimmt und an den hochohmigen Eingängen aller nicht sendenden Teilnehmer liegt dieselbe Spannung wie am Kernwiderstand. Im eingeschwungenen Zustand kann dann das System nach FIG. 2 gleich betrachtet werden wie das in FIG. 1 skizzierte System.

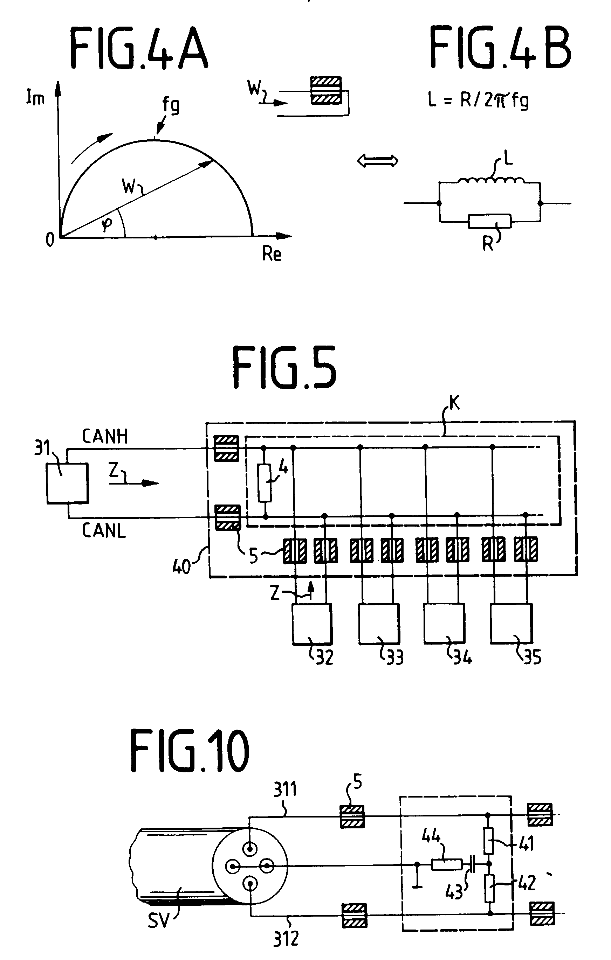

Wesentlich ist nun weiter der gezielte Einsatz von Dämpfungsmitteln, beispielsweise Dämpfungsperlen aus Ferritmaterial, die an sich bekannt und allgemein gebräuchlich sind. Zur Erläuterung der Wirkungsweise sind anhand von FIG. 4 einige wesentliche Eigenschaften skizziert. Mißt man den Scheinwiderstand einer Drahtschlinge, auf die eine Dämpfungsperle 5 geschoben wurde, nach Betrag und Phase, so erhält man in der komplexen Widerstandsebene Re-Im eine näherungsweise halbkreisförmige Ortskurve (FIG. 4A) für den Scheinwiderstand W in Abhängigkeit von der Frequenz f, für den eine einfache Nachbildung als Parallelschaltung einer Induktivität und eines ohmschen Widerstandes (FIG. 4B) möglich ist und der folgendes aussagt: für niedrige Frequenzen ist die Perle ein Kurzschluß (erst Ströme von einigen Ampere stören durch Vormagnetisierung). Für hohe Frequenzen wird in die Leitung ein annähernd reeller Widerstand hineintransformiert, dessen Größe fast nur von der Geometrie, genauer von der Länge der Perle abhängt und $\approx 10\Omega$/mm beträgt. Für mittlere Frequenzen ist der in die Leitung eintransformierte Widerstand W komplex. Je nach verwendetem Material liegt der Punkt fg (Grenzfrequenz) ($\varphi = 45°$) bei verschiedenen Frequenzen. Bei einer Anfangspermeabilität $\mu_i = 2000$ ist fg = 4 MHz, bei $\mu_i = 900$ ist fg = 9-10 MHz und bei $\mu_i = 250$ ist fg = 25 MHz so daß man überschlägig

$$\mu_i \cdot fg = 6000\text{-}8000 \text{ MHz}$$

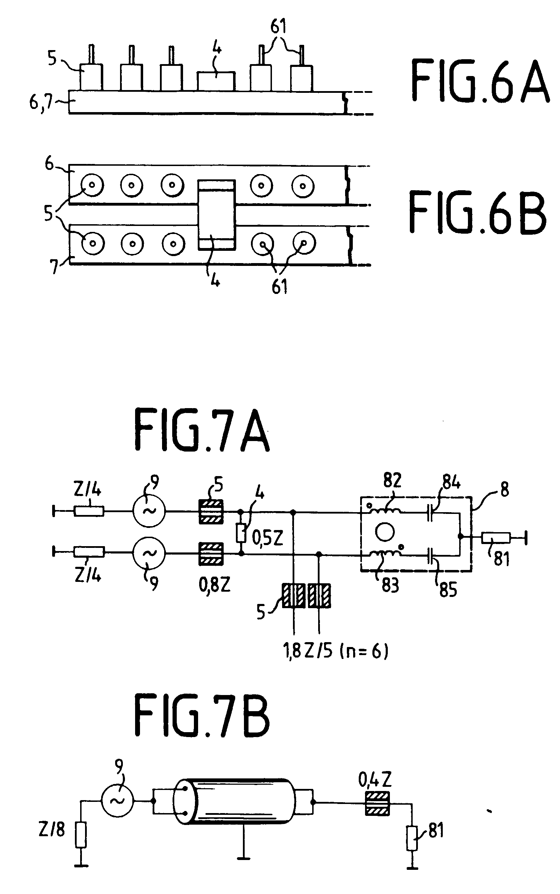

angeben kann. Die im Einzelfall am besten geeigneten Ausführungsformen von Dämpfungsperlen sind nach Material und Länge somit für den Fachmann leicht zu ermitteln. In FIG. 5 ist ein erfindungsgemäßes System skizziert, bei welchem wie in FIG. 2 und FIG. 3 mehrere Endstellen 31 bis 35 über sternförmig in einem Sternknoten 40 zusammenlaufende Übertragungsleitungen verbunden sind. Auf jedem sternknotenseitigen Aderende der Übertragungsleitungen ist eine Dämpfungsperle 5 angeordnet. Die von einer Endstelle in Richtung des Sternknotens gesehene resultierende Kernimpedanz für hochfrequente Signalanteile im Bereich von Signalflanken ergibt sich aus dem Zusammenwirken des Werts RK des Kernwiderstandes 4 im Sternknoten, den Übertragungsleitungen und dem Einfluß der Dämpfungsperlen. Der Kernwiderstand im Sternknoten bestimmt zusammen mit den Endstellen das Verhalten des Systems im eingeschwungenen Zustand. Wählte man z.B. für das sternförmig aufgebaute System dieselben Komponenten wie für das BUS-System nach FIG. 1, so ist RK=Z/2 zu setzen.

Für die hochfrequenten Signalanteile ist bei vielen Abzweigungen eines Systems nach FIG. 3 die resultierende Kernimpedanz ZK klein gegen den Wellenwiderstand Z der Übertragungsleitungen, und es treten die beschriebenen störenden Einschwingvorgänge an den Signalflanken auf. Um das vielfache Hin- und Herlaufen von Wellen auf den übertragungsleitungen wirkungsvoll zu unterbinden, wird für jede Übertragungsleitung zum Sternknoten eine Impedanz von Z angestrebt, d.h. von jeder Endstelle, z.B. mit einem Impulsreflektometer in die Übertragungsleitung gemessen, ergibt sich ein resultierender Widerstand gleich Z. Dies wird dadurch erreicht, daß die Dämpfungsperlen durch den in die Übertragungsleitung transformierten Wirkwiderstandsanteil den niedrigen Widerstand des Kerns zu Z ergänzen. Wird der durch eine Dämpfungsperle in die Übertragungsleitung transformierte Wirkwiderstandswert mit R bezeichnet, so ergibt sich bei paarweiser Anordnung der Dämpfungsperlen auf beiden Adern einer zweiadrigen Übertragungsleitung ein Wirkwiderstand r = 2R für jede Übertragungsleitung. Die Impedanz des Sternknotens für eine beliebige Anzahl von n Übertragungsleitungen ergibt sich dann aus der Parallelschaltung des Kernwiderstands 4 mit Wert RK und den anderen (n-1) Übertragungsleitungen, die jeweils die Impedanz Z + r aufweisen. Sieht man von der Leitung aus (vor den Perlen) in die Anordnung "eigene Perlen + Sternknoten", dann soll die eigene Leitung mit ihrem Wellenwiderstand Z abgeschlossen sein. Der Knoten kann aufgefaßt werden als eine Parallelschaltung des Kernwiderstandes (RK = Z/2) mit (n-1) Leitungen mit Perlen, also

$$Z = r + \text{Knotenimpedanz}$$

$$Z-r = (Z/2) \parallel (Z + r)/(n-1)$$

oder

$$1/(Z-r) = 2/Z + (n-1)/(Z+r)$$

Aus dieser Gleichung läßt sich r in Abhängigkeit von der Anzahl n der in dem Netzknoten verbundenen Übertragungsleitungen bestimmen zu:

$$r(n) = \frac{Z}{4}\left(\sqrt{n^2+8n} - n\right)$$

Die Tabelle führt einige Werte für r(n) an.

| n | r(n) |
|---|------|
| 2 | 0,618 Z |
| 4 | 0,732 Z |
| 5 | 0,765 Z |
| 6 | 0,791 Z |
| 10 | 0,854 Z |

Es zeigt sich, daß r für größere n nur noch wenig variiert und in guter Näherung für r ein Wert zwischen 0,8 Z und 0,85 Z angenommen werden kann.

Mit Kenntnis dieser Zusammenhänge kann die Auswahl von im Einzelfall am besten geeigneten Dämpfungsperlen nach Abmessungen und Ferritmaterial leicht vorgenommen werden. Über die Länge der Dämpfungsperlen wird im wesentlichen der Wirkwiderstandswert R näherungsweise festgelegt, während durch die Wahl des Ferritmaterials eine Zeitkonstante gegenüber steilen Impulsflanken einstellbar ist.

Durch die mit Hilfe des Materials wählbare Zeitkonstante des Kernes wird die steile Anstiegsflanke abgeflacht (bis auf einen kleinen Sockel durch die reelle Kernimpedanz). Im Fall einer hochfrequenten Fehlanpassung werden durch Mehrfachreflexionen gedämpfte Einschwingvorgänge beobachtet, deren Frequenz umgekehrt proportional zur Länge der Leitung ist, während die Dämpfung von der Güte der Leitung und der Fehlanpassung abhängt. Die Zeitkonstante $\tau = 1/2\pi fg$ der Perlen ist vorteilhafterweise gleich der oder größer als die doppelte Laufzeit auf der längsten Übertragungsleitung und zur sicheren Abtastung nach ISO-Norm kürzer als 0,15T mit T als Symboldauer der zu übertragenden Daten. Lange Leitungen können u.U. Perlen mit größerer Zeitkonstante als kurze Leitungen erhalten. Ein weiterer Vorteil dieser Anordnung ist, daß hochfrequente Störungen von einer Leitung in den niederohmigen Kern gelangen und stark gedämpft werden. Ist z.B. n = 6 und r = 0,8 Z, so wird eine in eine Übertragungsleitung eingekoppelte hochfrequente Störung bis zu einer anderen Endstelle um rund 27 dB gedämpft.

Für den Sternknoten 40 in FIG. 5, der auch die Dämpfungsperlen umfaßt, ist in FIG. 6 eine praktische Ausbildung als Beispiel gezeigt. Die eng benachbarten Kupferschienen 6 und 7 sorgen für geringe Induktivitäten zum Kernwiderstand 4, Kupfernägel 61 dienen als Anschlußstifte für die Dämpfungsperlen 5.

Die vorstehenden Maßnahmen zur Unterdrückung hochfrequenter Störsignale sind auf Gegentaktstörungen bezogen. Die Behandlung von Gleichtaktstörungen durch eine Wellenwiderstandsanpassung setzt definierte Wellenwiderstandsverhältnisse voraus, wie sie nur bei einem symmetrischen Kabel mit parallel zu den Signaladern verlaufendem Massebezugsleiter, z.B. Schirm gegeben sind. (Man untersucht Gleichtaktverhältnisse, indem gedanklich beide Adern der symmetrischen Leitung zu einer Ader verschmolzen oder parallel geschaltet werden).

FIG. 7A zeigt das Ersatzbild einer Gleichtaktkopplung, wie sie beim CAN-BUS-System gegeben ist, bei dem über je Z/4 beim Sender gespeist wird. Da die ganze symmetrische Verdrahtung galvanisch erdfrei angenommen ist, existiert nirgends ein punktförmiger Anschluß gegen Masse oder das Schirmpotential. Es gibt deshalb zwar große Kapazitäten der Summenleiter gegen den Schirm und Wellenwiderstände für Gleichtaktwellen zwischen 30 und 50 Ω, aber keinen exakten Leitungsabschluß, der Gleichtaktwellen vernichten und eine Leitungsresonanz mit Antennenwirkung verhindern kann. Deshalb wird der Übertrager 8 in FIG. 7A eingeführt, der zwei Wicklungen 82, 83 und zwei Kondensatoren 84 und 85 enthält und den Kern für Gleichtaktwellen kurzschließt. Der Übertrager kann z.B. eine einfache Ringkerndrossel sein, die zweidrähtig mit wenigen Windungen gewickelt ist. Der Abschlußwiderstand kann durch die Impedanz 81, die ein Widerstand oder auch eine Dämpfungsperle sein kann heraufgesetzt werden. Für Gegentaktspannungen ist der Übertrager hochohmig. Im Ersatzbild FIG. 7B ist die Leitung für Gleichtaktspannung (in FIG. 7A repräsentiert durch Spannungsquellen 9) mit 0,4 Z (bei n = 6) und mit R81 abgeschlossen. Damit ist sie für das Netz unwirksam gemacht. Dabei ist 0,4 Z die Parallelschaltung von zwei Dämpfungsperlen auf den die Gleichtaktstörung zum Netzknoten führenden Leitungen in FIG. 7A mit je 0,8 Z und die Wirkung des Übertragers 8 wird für Gleichtaktsignale als Kurzschluß angesehen.

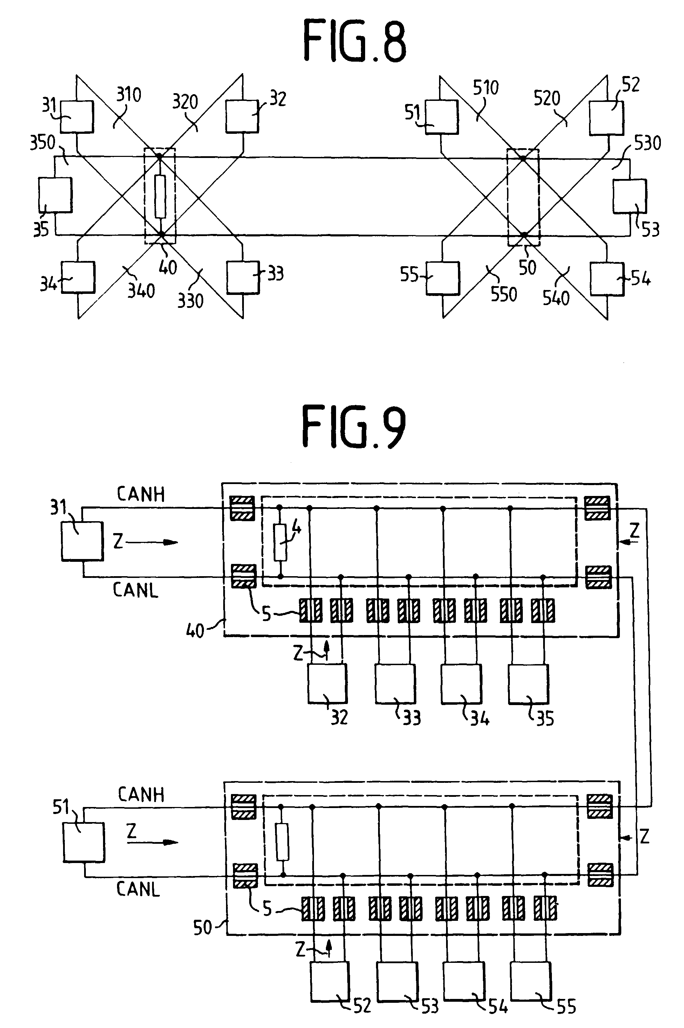

Die Erweiterung des für ein Leitungsnetz mit nur einem Sternnetz skizzierten und detailliert beschriebenen Systems auf mehrere miteinander verbundene Sternnetze innerhalb eines Systems ist nachfolgend an dem in FIG. 8 und FIG. 9 skizzierten System mit der Übersichtlichkeit halber nur zwei Sternnetzen veranschaulicht, wobei nur die gegenüber dem bereits beschriebenen System wesentlichen Abweichungen und Erweiterungen näher erläutert sind.

Neben einem ersten Sternnetz mit mehreren, den im folgenden als zentralen Sternknoten bezeichneten Sternknoten 40 mit Teilnehmer-Endstellen 31, 32,... verbindenden Übertragungsleitungen 310, 320,... ist ein zweites Sternnetz vorhanden, bei welchem Teilnehmer-Endstellen 51, 52,... über Übertragungsleitungen 510, 520,... an einen zweiten Sternknoten 50 angeschlossen sind. Im Unterschied zum Knoten K mit Kernimpedanz 40 weist dieser Sternknoten 50 nicht eine Impedanz wie den beschriebenen Kernwiderstand 4 auf. Der Knoten 50 ist mit dem Knoten 40 über eine Verbindungsleitung 500 verbunden. Die Verbindungsleitung sei von demselben Leitungstyp wie die Übertragungsleitungen 31, 32,... und 51, 52,... und kann dann auch als Verbindung zweier an den Enden offener Übertragungsleitungen von den beiden Knoten betrachtet werden. Jeder Stern ist an jeder Übertragungsleitung einschließlich der Verbindungsleitung 500 mit Dämpfungsperlen 5 in der beschriebenen Weise bestückt. Wichtig ist dabei wieder, daß die Knoten kompakt aufgebaut sind.

Sieht man in FIG. 9 von der Leitung aus in einen der Knoten 40 oder 50 hinein, so ist für Hochfrequenz unabhängig von den Teilnehmereingangsimpedanzen etwa eine Knoteneingangsimpedanz symmetrisch von Z zu erkennen.

Unsymmetrisch wäre der Sternknoten 50 gegen Masse nicht abgeschlossen und würde bei entsprechender Anregung als kapazitiv belastete Antenne wirken. Dies kann vermieden werden, wenn der Sternknoten 50 mit einem Abschluß 8, 81 wie in FIG. 7A skizziert, versehen wird. Das mit zwei Sternnetzen beschriebene System wie in FIG. 8 und FIG. 9 skizziert, kann um weitere Sternnetze erweitert werden, indem der Sternknoten jedes weiteren wie des zweiten Sternnetzes aufgebauten Sternnetzes nach Art einer Baumstruktur mit einem der vorhandenen Knoten über eine Verbindungsleitung wie die Leitung 500 oder mit Verbindungswegredundanz mit zwei oder mehr vorhandenen Sternknoten nach Art einer Maschenstruktur verbunden wird.

Grundsätzlich ist man beim Aufbau des Systems nur durch die Datenrate in der Netzausdehnung beschränkt. Bei einer digitalen Übertragungsrate von IM-Bit/sec will das CAN-BUS-Verfahren Signallaufzeiten bis zu 150ns zulassen. Rechnet man einen Quellenwiderstand eines CAN-Senders mit 60Ω und eine Last von ebenfalls 60Ω, so darf für eine Zeitkonstante von 150ns eine Parallelkapazität von 5nF aufgeladen werden, was bei Verwendung eines Sternviererkabels einer Gesamtleitungslänge von 65m entspricht. Derartige Leitungslängen werden bei einem erfindungsgemäßen Systemaufbau kaum erreicht werden.

Eine als Sternviererkabel SV ausgebildete Übertragungsleitung 310 und deren Anschluß an den zentralen Sternknoten 40 ist in FIG. 10 skizziert, wobei für die Kernimpedanz 4 im Sternknoten 40 Widerstände 41, 42, 44 und eine Kapazität 43 vorgesehen sind in der Weise, daß die gleich großen Widerstände 41, 42 in Serie zwischen den Leitungen 311 (CANH) und 312 (CANL) liegen und ihr gemeinsamer Verbindungspunkt über die Reihenschaltung von Kapazität 43 und Widerstand 44 mit den auf Bezugspotential GND (Masse) liegenden Adern des Sternviererkabels und vorzugsweise auch mit einem knoteninternen Masseanschluß verbunden ist. Das Sternviererkabel besitzt einen unsymmetrischen Wellenwiderstand von beispielsweise 35Ω. Die Dämpfungsperlen 5 sind hinsichtlich Material und Geometrie so gewählt, daß wie bereits ausführlich dargelegt, die Dämpfungsperlen für Hochfrequenz zusammen eine Wirkwiderstand von 80 bis 85 Prozent des symmetrischen Wellenwiderstands, der beispielsweise 100Ω betrage, verursachen. Für einen reflexionsfreien Abschluß gegen Masse können bei einem Perlen-Wirkwiderstand von je 40Ω nach allgemein bekannten Dimensionierungsregeln der Widerstand 44 gleich 2,5Ω und die Widerstände 41 und 42 zu je 25Ω gewählt werden. Ein durch Nullsetzen des Widerstands 44 entstehender geringer Fehlabschluß führt lediglich zu einem reflektierten Leistungsanteil von weniger als 1%. Bei Einsatz desselben Kabels in einem System nach CAN-Spezifikation, d.h. mit einem Lastwiderstand von 60Ω, ergibt sich mit je 30Ω für die Widerstände 41, 42, Null für 44 und je 40Ω als Wirkwiderstand der Dämpfungsperlen ein exakter Abschluß gegen Masse. Ein zusätzlicher Abschluß nach Art der Elemente 8, 81 in FIG. 7 ist dann nicht erforderlich.

Der besondere Vorteil der Erfindung ist die Tatsache, daß durch den Einsatz sehr preiswerter Komponenten eine Systemoptimierung möglich ist, um Einschwingoszillationen des Nutzsignals zu vermeiden und die Weiterleitung von Hochfrequenzstörungen zu dämpfen. Übertrager die auch als Drosselspule ausgebildet sein können, symmetrieren die Sternknoten und schließen Gleichtaktstörungen gegen die Massebezugsleiter kurz, ohne das Nutzsignal zu belasten. Auch für nichtgeschirmte Leitungen gelten dieselben Verhältnisse, aber der Wellenwiderstand für Gleichtaktsignale liegt dann im Bereich von 150 - 200 Ω.

## Patentansprüche

1. Datenkommunikationssystem mit mehreren Teilnehmer-Endstellen (31, 32,33,..), die durch Übertragungsleitungen (310, 320, 330,..) zum wechselseitigen Datentransfer verbunden sind, insbesondere in Kraftfahrzeugen, mit den folgenden Merkmalen:

   - die Übertragungsleitungen (310, 320, 330,..) bilden mindestens ein sternförmiges Netz um einen passiven Sternknoten (K) mit einer Lastimpedanz (4), vorzugsweise einem reellen Widerstand,

   - an den knotenseitigen Enden der Übertragungsleitungen sind Dämpfungsmittel (5) angeordnet, die bei Hochfrequenz einen Wirkwiderstandsanteil in die Übertragungsleitungen transformieren,

   - die Dämpfungsmittel sind so gewählt, daß von jeder Endstelle in Richtung auf den Netzknoten die jeweilige Übertragungsleitung für Hochfrequenz zumindest näherungsweise mit ihrem Wellenwiderstand abgeschlossen erscheint.

2. System nach Anspruch 1, dadurch gekennzeichnet, daß das System mehrere sternförmige Netze mit je einem Sternknoten (40,50) umfaßt, welche durch Verbindungsleitungen zwischen ihren Sternknoten verbunden sind, daß jeweils an den knotenseitigen Enden der Übertragungsleitungen und der Verbindungsleitungen die Dämpfungsmittel angeordnet sind, und daß die Lastimpedanz (4) nur einfach vorhanden ist.

3. System nach Anspruch 2, dadurch gekennzeichnet, daß die Lastimpedanz (4) in einem zentralen Sternknoten konzentriert ist.

4. System nach Anspruch 2 oder Anspruch 3, dadurch gekennzeichnet, daß die Verbindungsleitungen vom selben Leitungstyp sind wie die übertragungsleitungen.

5. System nach einem der Ansprüche 1 bis 4, dadurch gekennzeichnet, daß der reelle Widerstandswert der Lastimpedanz zumindest angenähert gleich dem halben Wellenwiderstand der Übertragungsleitungen ist.

6. System nach einem der Ansprüche 1 bis 5, dadurch gekennzeichnet, daß die Übertragungsleitungen symmetrische Leitungen sind und auf beiden Adern einer Übertragungsleitung jeweils Dämpfungsmittel gleicher Eigenschaften angeordnet sind.

7. System nach einem der Ansprüche 1 bis 6, dadurch gekennzeichnet, daß die Dämpfungsmittel (5) Dämpfungsperlen aus Ferritmaterial sind.

8. System nach Anspruch 7, dadurch gekennzeichnet, daß das Ferritmaterial der Dämpfungsperlen derart gewählt ist, daß die Zeitkonstante klein gegen die Symboldauer der übertragenen Daten und groß gegen im Netz auftretende Störsignale oder Halbwellen von Störfrequenzen ist.

9. System nach Anspruch 8, dadurch gekennzeichnet, daß die Zeitkonstante gleich oder größer als die doppelte Laufzeit auf der längsten übertragungsleitung ist.

10. System nach einem der Ansprüche 1 bis 9, gekennzeichnet durch die Symmetrierung des bzw. der Sternknoten mit einem Symmetrierübertrager (8) oder einer Symmetrierdrossel, die so geschaltet ist, daß Gleichtaktsignale kurzgeschlossen sind und Gegentaktsignale eine hohe Impedanz vorfinden.

11. System nach Anspruch 10, gekennzeichnet durch eine Zusatzimpedanz (81), die zusammen mit den Dämpfungsperlen (5) und dem Überträger (8) den bzw. die Knoten für Gleichtaktsignale wellenwiderstandsmäßig richtig abschließt.

## Claims

1. Data communication system with several subscriber terminal stations (31, 32, 33 ...), which are connected by transmission lines (310, 320, 330, ...) for reciprocal data transfer, particularly in motor vehicles, with the following features:

   - the transmission lines (310, 320, 330, ...) form at least one star-shaped network about a passive star node (K) with a load impedance (4), preferably an actual resistance,
   - attenuating means (5), which transform an effective resistance component in the transmission lines at high frequency, are arranged at the ends of the transmission lines at the node side,
   - the attenuating means are so selected that from each terminal station in direction to the network nodes the respective transmission line appears at least approximately terminated by its wave resistance for high frequency.

2. System according to claim 1, characterised thereby that the system comprises several star-shaped networks each with a respective star node (40, 50), which are connected by connecting lines between their star nodes, that the attenuating means are arranged each time at the node-side ends of the transmission lines and the connecting lines, and that the load impedance (4) is present only once.

3. System according to claim 2, characterised thereby that the load impedance (4) is concentrated in a central star node.

4. System according to claim 2 or claim 3, characterised thereby that the connecting lines are of the same conductor type as the transmission lines.

5. System according to one of claims 1 to 4, characterised thereby that the actual resistance value of the load impedance is at least approximately equal to the half wave resistance of the transmission lines.

6. System according to one of claims 1 to 5, characterised thereby that the transmission lines are symmetrical lines and attenuating means of like characteristics are arranged each time on the two wires of a transmission line.

7. System according to one of claims 1 to 6, characterised thereby that the attenuating means (5) are attenuating beads of ferrite material.

8. System according to claim 7, characterised thereby that the ferrite material of the attenuating beads is selected in such a manner that the time constant is small relative to the symbol duration of the transmission data and large relative to interference signals, or half waves of interference frequencies, occurring in the network.

9. System according to claim 8, characterised thereby that the time constant is equal to or larger than twice the running time on the longest transmission line.

10. System according to one of claims 1 to 9, characterised by the symmetrising of the or each star node by a symmetrising transmitter (8) or a symmetrising choke, which is so connected that push-push signals are short-circuited and push-pull signals encounter a high impedance.

11. System according to claim 10, characterised by an additional impedance (81) which, together with the attenuating beads (5) and the transmitter (8), correctly close, in terms of wave resistance, the or each node for push-push signals.

## Revendications

1. Système de communication de données comprenant plusieurs stations terminales d'abonnés (31, 32, 33, ... qui sont reliées par des lignes de transmission (310, 320, 330, ...) en vue du transfert bidirectionnel d'information, en particulier dans des véhicules automobiles, ayant les particularités suivantes:

   - les lignes de transmission (310, 320, 330, ..) forment au moins un réseau en forme d'étoile autour d'un noeud étoilé passif (K) ayant une impédance de charge (4), de préférence une résistance réelle,
   - aux extrémités côté noeud des lignes de transmission, sont disposés des moyens d'affaiblissement (5) qui, sous haute fréquence, créent par transformation une fraction de résistance non réactive dans les lignes de transmission et
   - les moyens d'affaiblissement sont choisis de manière qu'à partir de chaque station terminale en direction du noeud du réseau, la ligne de transmission concernée apparaisse terminée, pour la haute fréquence, au moins approximativement par son impédance caractéristique.

2. Système selon la revendication 1, caractérisé en ce qu'il comprend plusieurs réseaux en forme d'étoile présentant chacun un noeud étoilé (40, 50) et qui sont reliés par des lignes de liaison entre leurs noeuds étoilés, que les moyens d'affaiblissement sont disposés chaque fois aux extrémités côté noeud des lignes de transmission et des lignes de liaison, et que l'impédance de charge (4) n'existe qu'en un seul exemplaire.

3. Système selon la revendication 2, caractérisé en ce que l'impédance de charge (4) est concentrée dans un noeud étoilé central.

4. Système selon la revendication 2 ou 3, caractérisé en ce que les lignes de liaison sont du même type de ligne que les lignes de transmission.

5. Système selon une des revendications 1 à 4, caractérisé en ce que la valeur de résistance réelle de l'impédance de charge est au moins approximativement égale à la moitié de l'impédance caractéristique des lignes de transmission.

6. Système selon une des revendications 1 à 5, caractérisé en ce que les lignes de transmission sont des lignes symétriques et des moyens d'affaiblissement ayant les mêmes propriétés sont disposés chaque fois sur les deux conducteurs d'une ligne de transmission.

7. Système selon une des revendications 1 à 6, caractérisé en ce que les moyens d'affaiblissement (5) sont des perles d'affaiblissement en ferrite.

8. Système selon la revendication 7, caractérisé en ce que le ferrite des perles d'affaiblissement est choisi de manière que la constante de temps soit petite par rapport à la durée de symbole des données transmises et grande par rapport aux signaux perturbateurs produits dans le réseau ou aux demi-ondes de fréquences perturbatrices.

9. Système selon la revendication 8, caractérisé en ce que la constante de temps est égale ou supérieure au double du temps de propagation sur la ligne de transmission la plus longue.

10. Système selon une des revendications 1 à 9, caractérisé par la symétrisation du ou des noeuds étoilés par un transformateur de symétrisation (8) ou un self de symétrisation, qui est monté de manière que des signaux en phase soient court-circuités et que des signaux en opposition de phase rencontrent une haute impédance.

11. Système selon la revendication 10, caractérisé par une impédance supplémentaire (81) qui, ensemble avec les perles d'affaiblissement (5) et le transformateur (8), forme une terminaison convenable, pour ce qui concerne l'impédance caractéristique, du noeud ou des noeuds pour des signaux en phase.

# FIG.1

# FIG.2

# FIG.3

# FIG.4A

# FIG.4B

$$L = R/2\pi\,fg$$

# FIG.5

# FIG.10

FIG.6A

FIG.6B

FIG.7A

1,8 Z/5 (n= 6)

FIG.7B

# FIG.8

# FIG.9